# EUROPEAN PATENT APPLICATION

(11) **EP 0 848 519 A2**
(43) Date of publication of application: **17.06.1998**
(21) Application number: 97305018.0
(22) Date of filing: 09.07.1997
(51) Int. Cl.: H04L 12/26, H04L 12/24

(54) **Network activity level monitor and visual display**

(30) Priority: 05.12.1996 US 761029
(71) Applicant: ADVANCED MICRO DEVICES INC., Sunnyvale, California 94088-3453 (US)
(72) Inventor: Mahale, Dinesh Kamalakant, Newark, California 94560 (US); Larioza, Liane Tsugie Aihara, San Jose, California 95124 (US); Cheng, Bing, Mountain View, California 94043 (US)
(74) Representative: BROOKES & MARTIN

(57) **Abstract**

Method and system aspects for providing a visual display of activity in a computer network, the computer network including an enhanced integrated multiport repeater, the aspects including a counter within the enhanced integrated multiport repeater (eIMR/eIMR+) is enabled when a transmit activity signal is sampled at a 'true state from the enhanced multiport repeater. Further, a latch coupled to the counter within the eIMR/eIMR+ latches data from the counter, and a display unit coupled to the latch within the eIMR/eIMR+ provides a visual display indicating a percentage of network utilization based on the counted occurrences.

## Description

The present invention relates to computer network systems and more particularly to monitoring and providing visual indications of network utilization.

In many computing environments, computer systems are interlinked in local area networks (LANs). Proper operation of these networks is important for maintaining productivity. With networks providing more convenient resource-sharing among users, problems arising from slow and inefficient networks limit the full utilization of the conveniences.

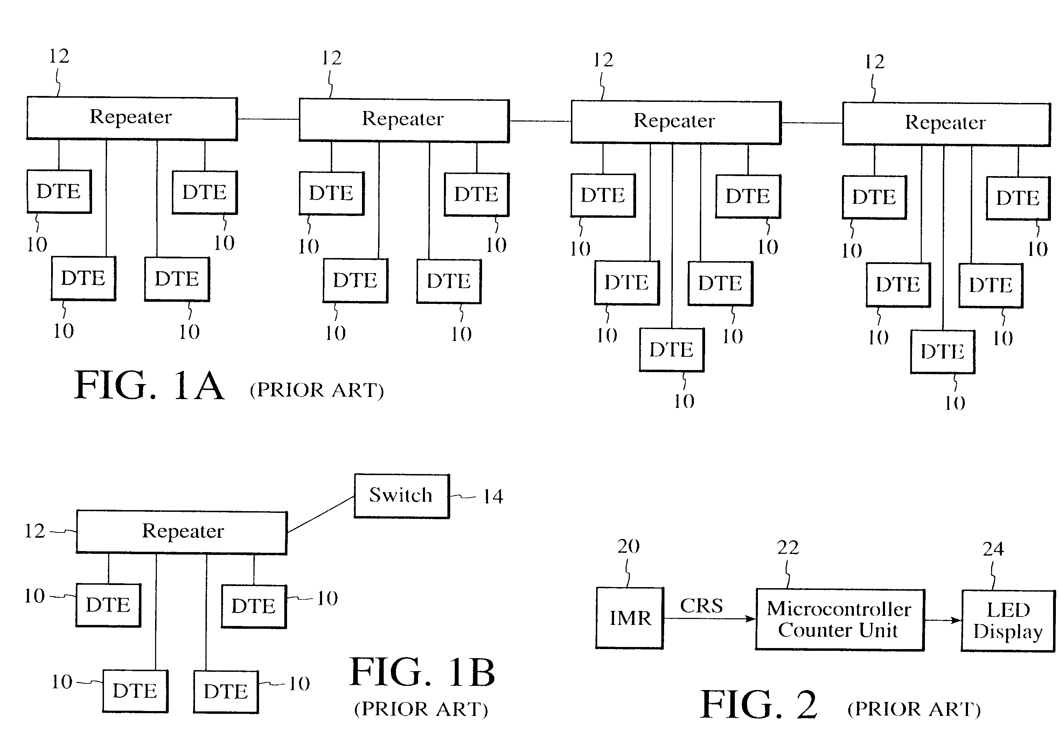

A portion of a typical (CSMA/CD) network collision domain is illustrated in Figure 1(a). As shown, one or more data terminal equipment (DTE) 10, e.g., computer workstations, are connected to a repeater 12, which is further connected to another repeater 12 having associated DTEs 10. Generally, when the traffic, resulting from one of the repeaters 12 transferring data among its associated DTEs 10 in the collision domain, reaches an activity level of a predetermined amount, for example, 30% or more, the collision domain is segmented into smaller domains, such as shown in Figure 1(b) with the repeater 12 coupled to a router/switch 14, to reduce the activity level below 30% and reduce the number of collisions occurring in the domain.

Efficiency of the network is typically maintained by keeping the activity level below a 30% activity level. Unfortunately, monitoring the activity level in unmanaged server hubs in a network is difficult due to a lack of methodology for accessing repeater statistics. Accordingly, a need exists for convenient and accurate activity level monitoring in a repeater on a network.

The present invention addresses this need through method and system aspects for providing a visual display of activity in a computer network, the computer network including an enhanced integrated multiport repeater (eIMR/eIMR+). In the present invention, a counter within the enhanced integrated multiport repeater is enabled when a transmit activity signal is sampled at a'true' state from the enhanced multiport repeater. Further, a latch coupled to the counter latches data from the counter, and a display unit coupled to the latch provides a visual display indicating a percentage of network utilization.

As an integrated part of the repeater, the present invention achieves effective network activity monitoring without requiring additional external hardware and firmware development. Further, the efficiency of the network is more readily maintained at a desirable level through the ability to provide competent activity level monitoring. These and other advantages of the aspects of the present invention will be more fully understood in conjunction with the following detailed description and accompanying drawings.

Figures 1(a) and 1(b) illustrate block diagram representations of a typical collision domains of a network.

Figure 2 illustrates a prior art external activity level monitor scheme for a network.

Figure 3 illustrates an activity level monitor circuit integrated within a repeater in accordance with the present invention.

Figure 4 illustrates a timing diagram for the monitor circuit in accordance with the present invention.

The present invention relates to network activity level monitors. The following description is presented to enable one of ordinary skill in the art to make and use the invention and is provided in the context of a patent application and its requirements. Various modifications to the preferred embodiment and the generic principles and features described herein will be readily apparent to those skilled in the art.

A general approach to providing activity level monitoring involves counting the number of packets on the network, such as an Ethernet or fast Ethernet network, over a given period. A block diagram of the circuitry involved in a typical approach is illustrated in Figure 2. An integrated multiport repeater (IMR) 20, such as one described in U.S. Patent 5,265,123, entitled "Expandable Repeater", issued 11/23/93 to Vijeh, et al., is coupled to a microcontroller counter unit 22. The microcontroller counter unit 22 is further coupled to an LED display 24. In operation, the microcontroller counter unit 22 is programmed to sample a carrier sense signal. The microcontroller counter unit 22 then looks at the carrier or port information encoded into carrier sense signals and based on that information the utilization of the network can be determined for a given period of time. The result is percentage utilization level for the network collision domain. The firmware typically associated with microcontroller counter unit 22 appropriately uses the information to drive the LED display 24 by encoding the count data to drive some number of LEDs.

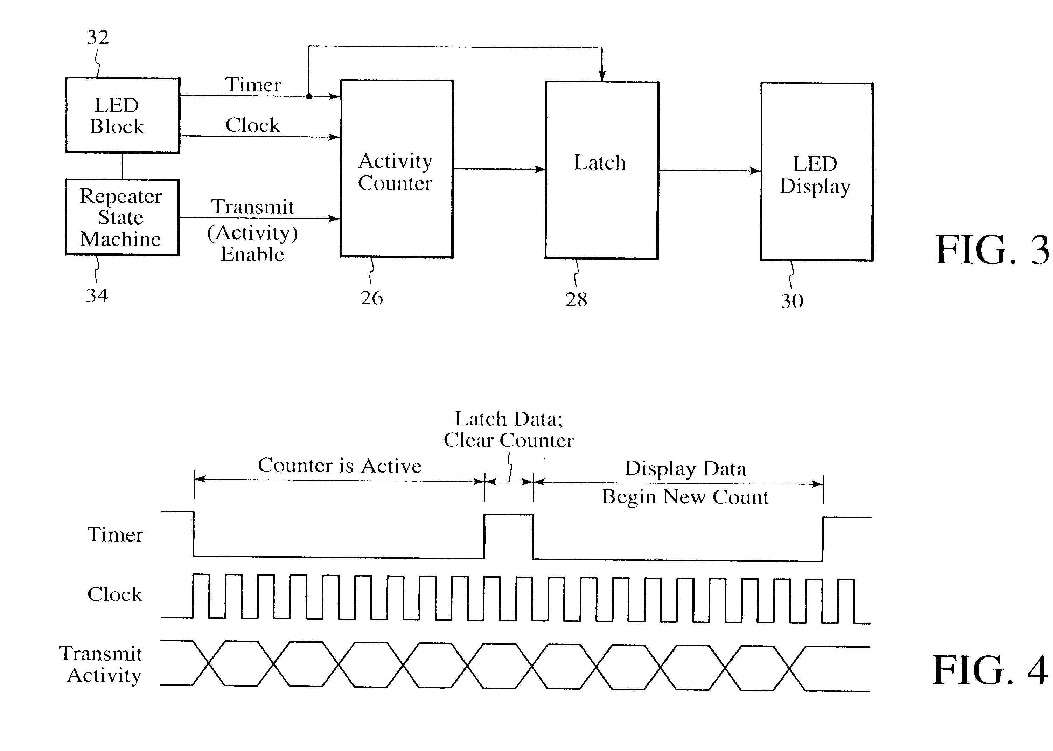

While activity level monitoring systems similar to Figure 2 allow some amount of collision domain management, such as the domain shown in Figure 1(a), the need for adding external circuitry components and corresponding firmware development in order to accommodate the microcontroller counter unit 22 complicates the overall system and increases system costs. The present invention eliminates these deficiencies by providing an efficient monitoring system integrated in the repeater mechanism. Figure 3 illustrates a block diagram of the monitoring system in accordance with the present invention.

As shown in Figure 3, the monitoring system of the present invention as a part of the repeater mechanism, such as an enhanced integrated multiport repeater, eIMR or eIMR+, part numbers Am79C984 or Am79C985, available from Advanced Micro Devices, Inc. (AMD), Sunnyvale, CA, includes an activity counter 26 coupled to a latch 28 with the latch 28 further coupled to an LED display 30. The activity counter 26, e.g., a standard 15-bit counter, receives a timer signal and a clock signal from an LED block 32 of the repeater. The LED block 32 generates various clock signals for providing differing rates of blinking for the LED display 30, as is well understood by those skilled in the art. The monitoring system then readily utilizes two of these generated clock signals as the timer signal and the clock signal. Of course, other signal generators could also be used to supply the timer and the clock signals. The activity counter 26 preferably samples a transmit enable signal and counts the number of times the transmit enable signal was sampled at the 'true' state. The counts preferably occur at the frequency of the free running clock signal and are enabled by the 'true' state of the transmit activity signal during the 'counting period'. The value of the activity counter 26 is suitably stored by the latch 28 for display in a next monitoring cycle/counting period. Once the value is stored, the activity counter 26 preferably is cleared to allow counting to occur in the next monitoring cycle.

By way of example, using a 15-bit counter running at approximately 125 kHz (kiloHertz) and a timer signal with an approximately 250 ms (millisecond) period and approximately 100 ns (nanosecond) high time, the activity counter 26 suitably counts the number of times the transmit activity enable signal is sampled at a true state during the counting period, e.g., the low time of the timer signal. Preferably, the counter's free-running clock has a granularity to detect a minimum packet size of approximately 96 bit times, since 96 bit times is typically considered a minimum fragment size for a healthy Ethernet network. Of course, the clock and timer signals described are examples for a preferred embodiment, but other frequencies could be chosen as necessary to accommodate other individual network requirements.

Figure 4 illustrates a timing diagram representative of the relationship among the timer, clock, and transmit activity enable signals. As shown, the activity counter 26 is suitably active and performs counting during the timer signal's low time. During the timer signal's high time, the count data from the activity counter 26 is preferably latched by the latch 28 before clearing the activity counter 26. The high time is substantially negligible in comparison to the timer signal's low time. During the timer signal's next low time, the activity counter 26 suitably begins a new counting session and the count data in the latch 28 is converted by the encoding logic to reflect the appropriate percentage network utilization in the LED display 30. Network utilization is suitably determined as a percentage of bandwidth, with 100% utilization representing maximum network utilization per given window of time. For example, in software implementation, (utilization = # of packets * (9.6 + 6.4) + (octets * .8) / counting interval*10000). Suitably, the percentage utilization of the network is readily signified by multiplying the counter output by the clock period and dividing by the timer low time. The number of LEDs lit in the LED display 30 is suitably proportioned according to the latch data. By way of example, X% utilization would be signified by all LEDs being lit, X/2% utilization would be signified by all but one of the LEDs being lit, and so on.

With the present invention, a straightforward and effective activity level monitor as an integral portion of a repeater is capably achieved. Providing the monitor on-chip is faster and less expensive than traditional approaches that require external circuitry. Thus, overall network efficiency and utility is better maintained through the integrated activity level monitor and visual display of the present invention.

Although the present invention has been described in accordance with the embodiments shown, one of ordinary skill in the art will recognize that there could be variations to the embodiment and those variations would be within the spirit and scope of the present invention. Accordingly, many modifications may be made by one of ordinary skill without departing from the spirit and scope of the present invention, the scope of which is defined by the following claims.

## Claims

1. A system for providing a visual display of activity in a computer network, the computer network including an enhanced integrated multiport repeater (eIMR/eIMR+) comprising:
a network monitoring activity system located within the eIMR/eIMR+; the network monitoring activity system further including:
a counter is enabled when a transmit activity signal is sampled at a 'true' state from the eIMR/eIMR+;
a latch coupled to the counter for latching data from the counter; and
a display unit coupled to the latch for providing a visual display indicating a percentage of network utilization based upon the counted occurrences.

2. The system of claim 1 wherein the counter further receives a timer signal for activating the counter.

3. The system of claim 2 wherein the counter is activated during a low time of the timer signal.

4. The system of claim 3 wherein the counter is cleared during a high time of the timer signal.

5. The system of claim 4 wherein the latch latches the data from the counter during the high time of the timer signal.

6. The system of claim 3 wherein the low time of the timer signal comprises approximately 250 ms.

7. The system of claim 4 wherein the high time of the timer signal comprises approximately 100 ns.

8. The system of claim 2 wherein the counter further receives a free-running clock signal.

9. The system of claim 8 wherein the clock signal detects a minimum packet size.

10. The system of claim 9 wherein the minimum packet size comprises approximately 96 bit times.

11. A method for providing a visual display of network activity from a repeater in the network, the method comprising
providing an enhanced integrated multiport repeater (eIMR/eIMR+), the enhanced integrated multiport repeater including a network activity monitoring system located therewithin, the network activity monitoring system comprising:
a counter is enabled when a transmit activity signal is sampled of a true signal from the enhanced multiport repeater;
a latch coupled to the counter for latching data from the counter; and
a display unit coupled to the latch for providing a visual display indicating a percentage of network utilization based upon the counted occurrences.

12. The method of claim 11 the method further comprising providing a timer signal to the counter.

13. The method of claim 12 the method further comprising activating the counter during a low time of the timer signal.

14. The method of claim 13 the method further comprising clearing the counter during a high time of the timer signal.

15. The method of claim 14 further comprising latching the data from the counter during the high time of the timer signal.

16. The method of claim 13 wherein the low time of the timer signal comprises approximately 250 ms.

17. The method of claim 14 wherein the high time of the timer signal comprises approximately 100 ns.

18. The method of claim 12 the method further comprising providing a free-running clock signal to the counter.

19. The method of claim 18 wherein the clock signal detects a minimum packet size.

20. The method of claim 19 wherein the minimum packet size comprises approximately 96 bit times.

21. An apparatus for monitoring activity levels over predetermined time periods in a collision domain of an Ethernet computer network and providing a visual display of the activity levels, the apparatus comprising:
an enhanced integrated multiport repeater (eIMR/eIMR+), the eIMR/eIMR+ comprising state logic and providing a transmit enable signal;
a counter within the eIMR/eIMR+ is enabled when counting occurrences of the 'true' state of the transmit enable signal during a counting period;
a latch within the eIMR/eIMR+ for latching count data from the counter; and
a display unit within the eIMR/eIMR+ for displaying a representation of the count data in the latch.

22. The apparatus of claim 21 further comprising signal generation means within the eIMR/eIMR+ for providing a free-running clock signal and a timer signal to the counter.

23. The apparatus of claim 22 wherein the counter counts the number of times the transmit enable signal is at a 'true' state during a low time of the timer signal.

24. The apparatus of claim 23 wherein the latch latches the count data during a high time of the timer signal.
